# EUROPÄISCHE PATENTSCHRIFT

(11) **EP 2 595 919 B1**
(45) Veröffentlichungstag und Bekanntmachung des Hinweises auf die Patenterteilung: **02.09.2015**
(21) Anmeldenummer: 11736312.7
(22) Anmeldetag: 06.07.2011
(51) Int. Cl.: C01B 33/18, C09C 1/30, B32B 5/16

(54) **SILICIUMDIOXIDPULVER MIT SPEZIELLEN OBERFLÄCHENEIGENSCHAFTEN UND DIESES PULVER ENTHALTENDE TONERZUSAMMENSETZUNG**
SILICON DIOXIDE POWDER HAVING SPECIAL SURFACE PROPERTIES AND TONER COMPOSITION CONTAINING SAID POWDER
POUDRE DE DIOXYDE DE SILICIUM À PROPRIÉTÉS DE SURFACE PARTICULIÈRES ET COMPOSITION DE TONER CONTENANT CETTE POUDRE

(30) Priorität: 21.07.2010 DE 102010031585
(43) Veröffentlichungstag der Anmeldung: 29.05.2013
(73) Patentinhaber: Evonik Degussa GmbH, 45128 Essen (DE)
(72) Erfinder: HILLE, Andreas, 79541 Lörrach (DE)
(86) Internationale Anmeldenummer: PCT/EP2011/061357
(87) Internationale Veröffentlichungsnummer: WO 2012/010416

(56) Entgegenhaltungen:
- EP-A1- 1 295 850
- EP-A1- 1 997 776
- WO-A1-03/054089

## Beschreibung

Die Erfindung betrifft ein Siliciumdioxidpulver mit speziellen Oberflächeneigenschaften und dessen Herstellung. Die Erfindung betrifft weiterhin eine Tonerzusammensetzung.

In DE-A-10145162 wird ein hydrophiles, pyrogenes Siliciumdioxid in Form aggregierter Primärpartikel mit einer mittleren Partikelgrösse von kleiner als 100 nm offenbart, welches vorzugsweise eine spezifische Oberfläche von 25 bis 500 m²/g mit einer minimalen Oberflächenrauigeit, aufweist. In DE-A-102004063762 wird ein hydrophiles, pyrogenes Siliciumdioxid in Form aggregierter Primärpartikel mit einer mittleren Partikelgrösse von 0,5 - 1000 nm offenbart, welches vorzugsweise eine spezifische Oberfläche von 1 bis 1000 m²/g aufweist. In DE-A-102005007753 wird ein hydrophiles, pyrogenes Siliciumdioxid in Form aggregierter Primärpartikel mit einer mittleren Partikelgrösse von 0,5 - 1000 nm offenbart, welches vorzugsweise eine spezifische Oberfläche von mehr als 10 m²/g, bevorzugt 75 bis 350 m²/g aufweist. Bei den genannten Patentanmeldungen weist das pyrogene Siliciumdioxid vorzugsweise eine fraktale Dimension der Masse von kleiner oder gleich als 2,8 auf.

In DE-A-19756840 wird ein pyrogenes Siliciumdioxid offenbart, welches eine BET-Oberfläche zwischen 30 und 150 m²/g und eine fraktale BET-Dimension von kleiner als 2,605 aufweist. Das so erhaltene Siliciumdioxid kann beispielsweise zum Polieren eingesetzt werden. Dieses Siliciumdioxid wird erhalten, indem man in einem Flammenhydrolyseverfahren ein Wasserstoffverhältnis gamma von kleiner 1 und gleichzeitig ein Sauerstoffverhältnis lambda ebenfalls kleiner 1 einhält. Dabei ist gamma das Verhältnis von eingespeistem Wasserstoff zuzüglich Wasserstoff aus den Rohstoffen zu stöchiometrisch benötigtem Wasserstoff. Lambda ist das Verhältnis von eingespeistem Sauerstoff zu stöchiometrisch benötigtem Sauerstoff.

In EP-A-1997776 wird ein pyrogen hergestelltes Siliciumdioxidpulver mit niedriger Verdickungswirkung offenbart, welches in Form von aggregierten Primärpartikeln vorliegt, eine STSA-Oberfläche von 10 bis 500 m²/g, eine auf die STSA-Oberfläche bezogene Verdickungswirkung von 4 bis 8 mPas·g/m² und ein Mikroporenvolumen von 0,03 bis 0,07 cm³/g aufweist. Die Primärpartikeldurchmesser betragen vorzugsweise weniger als 40 nm.

Die Aufgabe der vorliegenden Erfindung bestand nun darin Partikel, bereitzustellen, die aufgrund ihrer Größe, sowie ihrer inneren und äußeren Struktur dazu in der Lage sind, auf Oberflächen bei mechanischer Belastung dieser Oberflächen, wie etwa einer Scherung, gute Hafteigenschaften zu zeigen. Eine weitere Aufgabe der Erfindung bestand darin ein Verfahren zur Herstellung dieser Partikel bereitzustellen.

Gegenstand der Erfindung ist ein Siliciumdioxidpulver, welches in Form aggregierter Primärpartikel mit einem mittleren Durchmesser von mindestens 40 nm, bevorzugt 40 bis 70 nm, besonders bevorzugt > 50 bis 60 nm, vorliegt und ein Verhältnis der BET-Oberfläche zur STSA-Oberfläche von mindestens 3,5, bevorzugt 3,5 bis 7, besonders bevorzugt 3,8 bis 6 aufweist.

Unter Primärpartikel werden im Sinne der Erfindung Partikel verstanden, die zunächst in der Reaktion gebildet, und im weiteren Reaktionsverlauf zu Aggregaten zusammenwachsen können.

Unter Aggregat im Sinne der Erfindung sind miteinander verwachsene Primärpartikel ähnlicher Struktur und Größe zu verstehen, deren Oberfläche kleiner ist, als die Summe der einzelnen, isolierten Primärpartikel. Mehrere Aggregate oder auch einzelne Primärpartikel können sich weiter zu Agglomeraten zusammenfinden. Aggregate oder Primärpartikel liegen dabei punktförmig aneinander. Agglomerate können jeweils in Abhängigkeit von ihrem Verwachsungsgrad durch Energieeintrag wieder zerlegt werden.

Das erfindungsgemäße Siliciumdioxidpulver weist bevorzugt eine BET-Oberfläche von 100 bis 400 m²/g und besonders bevorzugt von 200 bis 300 m²/g auf. Die BET-Oberfläche wird bestimmt nach DIN ISO 9277.

Die Bestimmung der BET-Oberfläche, der STSA-Oberfläche und des Mikroporenvolumens erfolgt durch Messung der N2-Adsorptionisothermen bei 77K. Das Siliciumdioxidpulver wird vor der Messung für 1 h bei 200°C im Vakuum entgast.

Die STSA-Oberfläche kennzeichnet die externe Oberfläche der dem Siliciumdioxidpulver zugrunde liegenden Partikel, d.h. ohne Berücksichtigung der durch Mikroporen hervorgerufenen Oberfläche. Die Bestimmung der STSA-Oberfläche erfolgt nach ISO 18852 unter Verwendung der spezifischen Schichtdickengleichung
t = (26,6818/(0,0124806-log(p/p0)))^{0,4},
mit p = Gasdruck und p₀ = Sättigungsdampfdruck des Adsorptivs bei der Messtemperatur, beide mit der Einheit Pa
Dieselbe Schichtdickengleichung wird zur Bestimmung des Mikroporenvolumens nach dem t-Verfahren (DIN 66135-2) verwendet.

Der mittlere Primärpartikeldurchmesser wird vorzugsweise durch Auszählung von TEM-Aufnahmen (TEM = Transmissions-Elektronenmikroskop) bestimmt.

In einer besonderen Ausführungsform weist das erfindungsgemäße Siliciumdioxidpulver eine auf die STSA-Oberfläche bezogene Verdickungswirkung von mehr als 8 mPas·g/m², besonders bevorzugt 8 bis 12 mPas·g/m², ganz besonders bevorzugt 9 bis 11 mPas·g/m² auf.
Die Verdickungswirkung (in mPas) wird bestimmt in einer Dispersion des Siliciumdioxidpulvers in einem ungesättigten Polyesterharz mit einer Viskosität von 1300 ± 100 mPas bei einer Temperatur von 22°C und gemessen mit einem Rotationsviskosimeter bei einer Scherrate von 2,7 s⁻¹ und einer Temperatur von 25°C. Geeignete ungesättigte Polyesterharze umfasssen Cokondensate aus ortho- oder meta-Phthalsäure und Malein- oder Fumarsäure, oder deren Anhydride, und einem niedermolekularen Diol, wie zum Beispiel Ethylenglykol, 1,2- oder 1,3-Propandiol, 1,2-, oder 1,3- oder 1,4-Butandiol oder neoPentylglykol ((CH₃)₂C(CH₂OH)₂), oder Polyole, wie Pentaerythrit, bevorzugt gelöst zu 30 bis 80 Gew.%, bevorzugt 60 bis 70 Gew.%, in einem olefinischen Reaktivverdünner als Lösemittel, wie zum Beispiel Monostyrol. Die Viskosität des Polyesterharzes beträgt 1300 +/- 100 mPas bei einer Temperatur von 22°C. 7,5 g Siliciumdioxidpulver werden zu 142,5 g Polyesterharzes bei einer Temperatur von 22°C eingebracht und mittels eines Dissolvers bei 3000 min⁻¹ dispergiert. 60 g dieser Dispersion werden mit weiteren 90 g des ungesättigten Polyesterharzes versetzt und der Dispergiervorgang wird wiederholt. Geeignet als ungesättigtes Polyesterharz ist beispielsweise Ludopal^{®} P6, BASF.

In einer weiteren besonderen Ausführungsform weist das erfindungsgemäße Siliciumdioxidpulver ein Mikroporenvolumen von bevorzugt mindestens 0,07 cm³/g hat, besonders bevorzugt 0,07 bis 0,09, ganz besonders bevorzugt 0,072 bis 0,080, auf.

Die fraktale Dimension Dₘ des erfindungsgemäßen Siliciumdioxidpulvers kann bevorzugt mindestens 2,80, besonders bevorzugt 2,80 bis 2,90 und ganz besonders bevorzugt 2,83 bis 2,87 sein. Dₘ wird bestimmt durch N₂-Adsorption im Druckbereich p/p₀ = 0,5 bis 0,8 nach der fraktalen BET-Theorie für die Mehrlagenadsorption nach dem von Pfeifer, Obert und Cole angegebenen Verfahren (Proc. R. Soc. London, A 423, 169 (1989).
Die Oberflächenrauhigkeit kann mittels der Theorie der Fraktale quantifiziert werden. Fraktale sind Strukturen, die sich auf verschiedenen Längenskalen ähneln. Viele Eigenschaften von Fraktalen sind mit Potenzgesetzen beschreibbar. Untersucht man beispielsweise die Zunahme der Masse m mit dem Radius r, so ergibt sich für den Grenzfall einer kompakten Kugel die massenfraktale Dimension dₘ = 3. Für eine Struktur, welche Hohlräume und Poren besitzt, resultiert eine massenfraktale Dimension dₘ < 3. Auch Oberflächen können fraktale Eigenschaften besitzen. Hier skaliert die Größe der Oberfläche mit dem Radius. Für eine perfekt glatte Oberfläche ergibt sich 5. Für pyrogene Kieselsäuren liegt die massenfraktale Dimension in der Regel im Bereich von 1,5 bis 2,0 und die oberflächenbezogenen Dimensionen bei ca. 2,0.

Die auf die STSA-Oberfläche, Einheit m²/g, bezogene DBP-Absorption, Einheit g SiO₂/100 g DBP, des erfindungsgemäßen Siliciumdioxidpulvers kann bevorzugt 3,5 g/100g m²g⁻¹ oder höher sein, besonders bevorzugt 3,5 bis 5 g/100g m²g⁻¹ sein. Die Dibutylphthalatabsorption wird gemessen mit einem Gerät RHEOCORD 90 der Fa. Haake, Karlsruhe. Hierzu werden 8 g des Siliciumdioxidpulvers auf 0,001 g genau in eine Knetkammer eingefüllt, diese mit einem Deckel verschlossen und Dibutylphthalat über ein Loch im Deckel mit einer vorgegebenen Dosierrate von 0,0667 ml/s eindosiert. Der Kneter wird mit einer Motordrehzahl von 125 Umdrehungen pro Minute betrieben. Nach Erreichen des Drehmomentmaximums wird der Kneter und die DBP-Dosierung automatisch abgeschaltet. Aus der verbrauchten Menge DBP und der eingewogenen Menge der Partikel wird die DBP-Absorption berechnet nach: DBP-Absorption (g/100 g) = (Verbrauch DBP in g / Einwaage Partikel in g) x 100.

Ein weiterer Gegenstand der Erfindung ist ein Verfahren zur Herstellung des erfindungsgemäßen Siliciumdioxidpulvers, bei dem man
a) eine Mischung umfassend jeweils ein oder mehrere hydrolysierbare und/oder oxidierbare Siliciumverbindungen, sauerstoffenthaltende Gase und Primär-Brenngase, die mit den sauerstoffenthaltende Gasen unter Bildung von Wasser reagieren, einer aus einem Brenner in einem Flammrohr abbrennenden Flamme zuführt,
b) getrennt hiervon aus einem den Brenner umgebenden Rohr ein oder mehrere Sekundär-Brenngase in das Flammrohr einleitet, und
c) zu einem späteren Zeitpunkt diesem Reaktionsgemisch ein oder mehrere Tertiär-Brenngase innerhalb des Flammrohres zuführt,
d) nachfolgend den Feststoff aus dem Reaktionsgemisch abtrennt wobei gilt
   gamma₁ < 1, gamma₂ < 1 und gamma₃ < 1 und
   gamma_{1/2} = gamma₁ + gamma₂ < 1
   gamma_{Gesamt} = gamma₁ + gamma₂ + gamma₃ > 1 und
   lambda₁ > 1 mit
   gamma₁ = Primär-Brenngas / stöchiometrisch benötigtes Brenngas
   gamma₂ = Sekundär-Brenngas / stöchiometrisch benötigtes Brenngas
   gamma₃ = Tertiär-Brenngas / stöchiometrisch benötigtes Brenngas und
   lambda₁ = Sauerstoff im sauerstoffenthaltenden Gas / stöchiometrisch benötigter Sauerstoff

Unter "späteren Zeitpunkt" soll verstanden werden, dass die Zugabe des Tertiär-Brenngases zu einem Zeitpunkt erfolgt, bei dem die Struktur und die Eigenschaften der Siliciumdioxidpartikel noch beeinflussbar sind. Bevorzugt wird das Tertiär-Brenngas 0,1 bis 30 ms, besonders bevorzugt 1 bis 10 ms und ganz besonders bevorzugt 2 bis 6 ms, nach Zugabe des Sekundär-Brenngases in das Reaktionsgemisch gegeben.

Pyrogen, insbesondere flammenhydrolytisch hergestellte Verfahren werden üblicherweise so ausgeführt, dass die Ausgangsstoffe in einem derartigen stöchiometrischen Verhältnis zueinander stehen, dass das zugeführte Brenngas mindestens ausreicht um die Einsatzstoffe zu hydrolysieren. Die hierfür benötigte Menge an Brenngas wird als stöchiometrische Brenngasmenge bezeichnet.

Bei dem erfindungsgemäßen Verfahren wird das Verhältnis des zugeführten Primär-Brenngases (in Mol) zu der soeben definierten stöchiometrisch erforderlichen Brenngasmenge (in Mol) als gamma₁ bezeichnet. gamma₁ ist im erfindungsgemäßen Verfahren kleiner als 1. Es gilt: gamma₁ = (Primär-Brenngas/ Brenngas stöchiometrisch) < 1.

Weiterhin wird bei dem erfindungsgemäßen Verfahren ein oder mehrere Sekundär-Brenngase eingesetzt. Diese werden getrennt vom Primär-Brenngas aus einem den Brenner umgebenden Rohr in das Flammrohr eingeleitet. Das Verhältnis des zugeführten Sekundär-Brenngases (in Mol) zu der stöchiometrisch erforderlichen Brenngasmenge (in Mol) wird als gamma₂ bezeichnet. gamma₂ ist im erfindungsgemäßen Verfahren kleiner als 1. Es gilt: gamma₂= (Primär-Brenngas/ Brenngas stöchiometrisch) < 1

Weiterhin wird bei dem erfindungsgemäßen Verfahren ein Tertiär-Brenngas eingesetzt. Dieses wird zu einem späteren Zeitpunkt als das Primär-Brenngas und das Sekundär-Brenngas in die Flamme eingebracht. Das Verhältnis des zugeführten Tertiär-Brenngases (in Mol) zu der stöchiometrisch erforderlichen Brenngasmenge (in Mol) wird als gamma₃ bezeichnet. gamma₃ ist im erfindungsgemäßen Verfahren kleiner als 1. Es gilt: gamma₃ = (Primär-Brenngas/Brenngas stöchiometrisch) < 1

Weiterhin gilt für das erfindungsgemäßen Verfahren, dass
gamma_{1/2} = gamma + gamma₂ < 1 und
gamma_{Gesamt}= gamma₁ + gamma₂ + gamma₃ > 1 ist.

Für eine bevorzugte Ausführungsform der Verfahrens gilt gamma₁ > gamma₂.

Für eine weitere bevorzugte Ausführungsform des Verfahrens gilt gamma₁ < gamma₃ und/oder gamma₂ < gamma₃.

Für eine weitere bevorzugte Ausführungsform des Verfahrens gilt
0,2 ≤ gamma₁ ≤ 0,6 und 0,4 ≤ gamma₃ ≤ 0,8.

Die Zuführung von Sekundär-Brenngas und/oder Tertiär-Brenngas kann beispielsweise mittels einer Ringdüse erfolgen.

Pyrogen, insbesondere flammenhydrolytisch hergestellte Verfahren werden üblicherweise so ausgeführt, dass eine Sauerstoffmenge, beispielsweise aus der Luft eingesetzt wird, die mindestens ausreicht um die Siliciumausgangsverbindungen in Siliciumdioxid zu überführen und Brenngas umzusetzen. Diese Sauerstoffmenge wird als stöchiometrische Sauerstoffmenge bezeichnet.

Das Verhältnis des in Form eines sauerstoffenthaltenden Gases zugeführten Sauerstoffes (in Mol) zu der soeben definierten stöchiometrisch erforderlichen Sauerstoffmenge (in Mol) wird als lambda₁ bezeichnet. Lambda₁ ist im erfindungsgemäßen Verfahren größer als 1. Es gilt: lambda₁ =Primär-Sauerstoff/ Sauerstoff stöchiometr. > 1. In einer bevorzugten Ausführungsform gilt 1 < lambda₁ ≤ 10, wobei 3 ≤ lambda₁ ≤ 7 besonders bevorzugt ist.

Bei dem erfindungsgemäßen Verfahren werden eine oder mehrere hydrolysierbare Siliciumverbindungen eingesetzt. Dabei sind unter hydrolysierbaren Siliciumverbindungen solche zu verstehen, die durch Reaktion mit Wasser in Siliciumdioxid überführt werden. Die Siliciumverbindungen können dampfförmig oder als Lösung in einem Lösungsmittel mit dem keine Reaktion stattfindet, eingebracht werden. Vorzugsweise werden die Siliciumverbindungen dampfförmig eingebracht.

Vorzugsweise handelt es sich bei den hydrolysierbaren Siliciumverbindungen um Siliciumhalogenide, Siliciumorganohalogenide und/oder Siliciumalkoxide. Besonders bevorzugt können SiCl₄, MeSiCl₃, Me₂SiCl₂, Me₃SiCl, Me₄Si, HSiCl₃, Me₂HSiCl, MeEtSiCl₂, Cl₃SiSiMeCl₂, Cl₃SiSiMe₂Cl, Cl₃SiSiCl₃, MeCl₂SiSiMeCl₂, Me₂ClSiSiMeCl₂, Me₂ClSiSiClMe₂, Me₃SiSiClMe₂, Me₃SiSiMe₃, MeEtSiCl₂, Tetraethoxysilan, Tetramethoxysilan, D4-Polysiloxan und/oder D5-Polysiloxan eingesetzt werden. Ganz besonders bevorzugt wird SiCl₄ eingesetzt.

Als Brenngas kann bevorzugt Wasserstoff, Methan, Ethan, Propan, Butan, Erdgas und/oder Kohlenmonoxid eingesetzt werden. Besonders bevorzugt ist Wasserstoff.

Als sauerstoffenthaltendes Gas wird bevorzugt Luft (Primärluft, Sekundärluft)) eingesetzt. Es ist jedoch auch möglich die Luft mit Sauerstoff, gewöhnlich bis zu einem Sauerstoffanteil von 35 Vol.-%, anzureichern.

Nach der Abtrennung von gasförmigen Stoffen kann das Siliciumdioxidpulver mit Wasserdampf behandelt werden. Diese Behandlung dient in erster Linie dazu chloridhaltige Gruppen von der Oberfläche zu entfernen. Gleichzeitig reduziert diese Behandlung die Anzahl von Agglomeraten. Das Verfahren kann kontinuierlich ausgeführt werden, indem das Pulver mit Wasserdampf, gegebenenfalls zusammen mit Luft, im Gleich- oder Gegenstrom behandelt wird. Die Temperatur bei der die Behandlung mit Wasserdampf erfolgt, beträgt zwischen 250 und 750°C, wobei Werte von 450 bis 550°C bevorzugt sind.

Ein weiterer Gegenstand der Erfindung ist ein Verfahren zur Herstellung eines oberflächenmodifizierten Siliciumdioxidpulvers, welches in Form aggregierten Primärpartikel vorliegt, wobei die Oberfläche der Aggregate oder Teile davon mit chemisch gebundenen linearen und/oder verzweigten Alkylsilylgruppen mit 1 bis 20 Kohlenstoffatomen belegt sind, bei dem man das erfindungsgemäße Siliciumdioxidpulver mit einem oder mehreren, gegebenenfalls in einem organischen Lösungsmittel gelösten Mitteln zur Oberflächenmodifizierung, welche lineare und/oder verzweigte Alkylsilylgruppen mit 1 bis 20 Kohlenstoffatomen aufweisen oder bei denen diese während der Reaktion entstehen, besprüht und das Gemisch anschließend bei einer Temperatur von 120 bis 400°C über einen Zeitraum von 0,5 bis 8 Stunden, gegebenenfalls unter Schutzgas, thermisch behandelt.

Bevorzugt wird das Mittel zur Oberflächenmodifizierung aus der Gruppe bestehend aus Hexamethyldisilazan, Dimethyldimethoxysilan, Dimethyldiethoxysilan, Trimethylmethoxysilan, Methyltrimethoxysilan, Butyltrimethoxysilan, Dimethyldichlorosilan, Trimethylchlorosilan und/oder Silikonölen ausgewählt.

Das nach dem Verfahren erhältliche oberflächenmodifiziertes Siliciumdioxidpulver, liegt in Form von aggregierten Primärpartikeln vor, deren Oberfläche oder Teile davon mit chemisch gebundenen linearen und/oder verzweigten Alkylsilylgruppen mit 1 bis 20 Kohlenstoffatomen belegt sind.

Das erfindungsgemäße Siliciumdioxidpulver und das oberflächenmodifizierte Siliciumdioxidpulver können in einer Tonerzusammensetzung, bevorzugt mit einem Anteil des Siliciumdioxidpulvers von 0,1 bis 10 Gew.-%, bezogen auf die Tonerzusammensetzung, enthalten sein.

### Beispiele

Beispiel 1 (Vergleichsbeispiel): 108 kg/h Siliciumtetrachlorid, 14 Nm³/h Wasserstoff (Primär-Brenngas) und 140 Nm³/Luft werden in einem Brenner gemischt, das Gemisch gezündet und in eine Reaktionskammer hinein verbrannt. In die Reaktionskammer werden zusätzlich 21 Nm³/h Wasserstoff (Sekundär-Brenngas) und 40 Nm³/h Sekundärluft eingebracht.

Das entstandene Pulver wird in einem nachgeschalteten Filter abgeschieden und anschließend im Gegenstrom mit Luft und Wasserdampf bei 520°C behandelt.

Beispiel 2 (Vergleichsbeispiel) wird analog Beispiel 1 durchgeführt, jedoch unter Verwendung der in Tabelle 1 angegebenen Einsatzstoffmengen.

Man erhält Siliciumdioxidpulver mit den in Tabelle 2 angegebenen Eigenschaften.

Beispiel 3 (gemäß Erfindung): 100 kg/h Siliciumtetrachlorid, 10 Nm³/h Wasserstoff (Primär-Brenngas) und 155 Nm³/Luft werden in einem Brenner gemischt, das Gemisch gezündet und in eine Reaktionskammer hinein verbrannt. In die Reaktionskammer werden zusätzlich 5 Nm³/h Wasserstoff (Sekundär-Brenngas) und 50 Nm³/h Sekundärluft eingebracht. Über eine nachgeschaltete Ringdüse werden zusätzlich 17 Nm³/h (Tertiär-Brenngas) in die Reaktionskammer eingebracht. Das entstandene Pulver wird in einem nachgeschalteten Filter abgeschieden und anschließend im Gegenstrom mit Luft und Wasserdampf bei 520°C behandelt.

Die Beispiele 4 und 5 (gemäß Erfindung) werden analog zu Beispiel 3 durchgeführt, jedoch mit den in Tabelle 1 angegebenen Einsatzstoffmengen.

Man erhält Siliciumdioxidpulver mit den in Tabelle 2 angegebenen Eigenschaften.

Beispiel 6 (Vergleichsbeispiel): 100 Gewichtsanteile des Siliciumdioxidpulvers aus Beispiel 1 werden in einem Mischer vorgelegt und zunächst mit Wasser und anschließend mit 25 Gewichtsanteilen Hexamethyldisilazan (HMDS) besprüht. Danach wird das Reaktionsgemisch für 2 Stunden bei 150°C behandelt. Der Grad an Hydrophobie beträgt 99%.

Beispiel 7 (gemäß Erfindung): wie Beispiel 6, jedoch unter Verwendung des Siliciumdioxidpulvers aus Beispiel 3 und 15 Gewichtsanteilen HMDS.

Beispiel 8 (gemäß Erfindung): wie Beispiel 6, , jedoch unter Verwendung des Siliciumdioxidpulvers aus Beispiel 4 und 20 Gewichtsanteilen HMDS. Der Grad an Hydrophobie beträgt 99%.

Beispiel 9 (gemäß Erfindung): wie Beispiel 6, jedoch unter Verwendung des Siliciumdioxidpulvers aus Beispiel 5 und 20 Gewichtsanteilen HMDS. Der Grad an Hydrophobie beträgt 99%.

Beispiel 10 (Vergleichsbeispiel): Tonerzusammensetzung 97 Gewichtsteile eines negativ geladenen Roh-Tonerpulvers, hergestellt durch Polymerisation (Fa. Sinonar), 2,5 Gewichtsteile des mit HMDS oberflächenmodifizierten Siliciumdioxidpulvers aus Beispiel 6 und 0,5 Gewichtsteile AEROSIL^{®} RX200 werden zusammen in einem Henschel-Mischer 1 Minute bei 5000 U/min gemischt.

Beispiel 11 bis 13 (gemäß Erfindung) analog Beispiel 8, jedoch unter Verwendung des hydrophobierten Siliciumdioxidpulvers aus Beispiel 7 bis 9, anstelle des hydrophobierten Siliciumdioxidpulvers aus Beispiel 6.

Die triboelektrische Ladung der Beispiel 10 bis 13 wird gemessen, indem man jeweils 2 g der Tonerzusammensetzung der Beispiele 10 bis 13 mit jeweils 48 g Eisenpulver in einem 75 ml Glassgefäß mischt, das gemischte Pulver über einen Zeitraum von 24 Stunden bei 20°C und 60% Feuchtigkeit aufbewahrt. Nachfolgend wird das gemischte Pulver in einem Mischer über einen Zeitraum von 1, 3, 10, 30 and 90 Minuten behandelt und die triboelektrische Ladung mittels des Meßgerätes TB-200, hergestellt von Toshiba Chemical Corp. bestimmt. Tabelle 3 zeigt die ermittelten Werte. Dabei ist festzustellen, dass die mit dem erfindungsgemäßen Siliciumdioxidpulver hergestellten Tonerzusammensetzungen der Beispiele 11 bis 13 nur eine geringe Änderung der Ladung über die Zeit erfahren, während im Vergleichsbeispiel eine deutliche Abnahme zu beobachten ist.

Wie SEM (scanning electron microscope) Aufnahmen zeigen, haften die aggregierten Primärpartikel des erfindungsgemäßen Siliciumdioxidpulvers besonders gut auf der Oberfläche, auch bei mechanischer Belastung dieser Oberfläche.

**Tabelle 1: Einsatzstoffe und Einsatzmengen; Flammenparameter**

| **Beispiel** | | **1*** | **2*** | **3** | **4** | **5** |
|---|---|---|---|---|---|---|
| SiCl₄ | kg/h | 108 | 108 | 100 | 100 | 100 |
| Primär-H₂ | Nm³/h | 14 | 20 | 10 | 12 | 13 |
| Sekundär-H₂ | Nm³/h | 21 | 21 | 5 | 5 | 5 |
| Tertiär-H₂ | Nm³/h | - | - | 17 | 15 | 14 |
| Primär-Luft | Nm³/h | 140 | 140 | 155 | 155 | 155 |
| Sekundär-Luft | Nm³/h | 40 | 40 | 50 | 50 | 50 |
| gamma₁ | | 0,50 | 0,71 | 0,38 | 0,46 | 0,50 |
| gamma₂ | | 0,74 | 0,74 | 0,19 | 0,19 | 0,19 |
| gamma₃ | | - | - | 0,65 | 0,57 | 0,53 |
| gamma_{Gesamt} | | 1,24 | 1,45 | 1,22 | 1,22 | 1,22 |
| lambda₁ | | 4,13 | 2,90 | 6,28 | 5,26 | 4,86 |
| lambda_{Gesamt} | | 1,67 | 1,43 | 2,67 | 2,67 | 2,67 |

**Tabelle 2: Physikalisch-chemische Eigenschaften**

| **Beispiel** | | **1*** | **2*** | **3** | **4** | **5** |
|---|---|---|---|---|---|---|
| ∅ Primärpartikel | nm | 23 | 11 | 57 | 53 | 51 |
| BET-Oberfläche | m²g⁻¹ | 269 | 363 | 229 | 245 | 270 |
| STSA-Oberfläche | m²g⁻¹ | 118 | 214 | 41 | 57 | 71 |
| Verdickung | mPas | 840 | 1435 | 450 | 520 | 610 |
| Mikroporenvolumen | cm³g⁻¹ | 0,063 | 0,069 | 0,078 | 0,074 | 0,071 |
| Fraktalität Dₘ | - | 2,774 | 2,689 | 2,849 | 2,820 | 2,802 |
| DBP | g/100g | 256 | 300 | 180 | 210 | 251 |
| BET/STSA | - | 2,28 | 1,70 | 5,58 | 4,46 | 3,80 |
| Verdickung_{STSA} | mPas/ m²g⁻¹ | 7,12 | 6,71 | 10,98 | 9,12 | 8,59 |
| DBP_{STSA} | g/100g m²g⁻¹ | 2,17 | 1,40 | 4,39 | 3,68 | 3,53 |

| | | | | | | |
|---|---|---|---|---|---|---|
| * Vergleichsbeispiele | | | | | | |

**Tabelle 3: Tonerzusammensetzung - Triboelektrische Ladung (µC/g) in Abhängigkeit von der Zeit (min)**

| Beispiel | | | | | | |
|---|---|---|---|---|---|---|
| | SiO₂ aus Beispiel | 1 min | 3 min | 10 min | 30 min | 90 min |
| 10 | 6 | -21 | -18,5 | -16,5 | -14 | -10,5 |
| 11 | 7 | -15 | -15 | -15 | -14,5 | -14 |
| 12 | 8 | -14,5 | -15 | -14,5 | -14 | -14 |
| 13 | 9 | -17,5 | -16 | -15 | -14 | -15 |

## Patentansprüche

1. Siliciumdioxidpulver,
**dadurch gekennzeichnet, dass** es
in Form aggregierter Primärpartikel mit einem mittleren Durchmesser von mindestens 40 nm vorliegt und ein Verhältnis der BET-Oberfläche zur STSA-Oberfläche von mindestens 3,5, aufweist.

2. Siliciumdioxidpulver nach Anspruch 1,
**dadurch gekennzeichnet, dass**
die BET-Oberfläche 100 bis 400 m²/g beträgt.

3. Siliciumdioxidpulver nach den Ansprüchen 1 oder 2,
**dadurch gekennzeichnet, dass**
es eine auf die STSA-Oberfläche bezogene Verdickungswirkung von mehr als 8 mPas·g/m² besitzt.

4. Siliciumdioxidpulver nach den Ansprüchen 1 bis 3,
**dadurch gekennzeichnet, dass**
es ein Mikroporenvolumen von mindestens 0,07 cm³/g hat.

5. Siliciumdioxidpulver nach den Ansprüchen 1 bis 4,
**dadurch gekennzeichnet, dass**
die fraktale Dimension Dₘ mindestens 2,80 ist.

6. Siliciumdioxidpulver nach den Ansprüchen 1 bis 5,
**dadurch gekennzeichnet, dass**
die auf die STSA-Oberfläche bezogene DBP-Absorption 3,5 g/100g m²g⁻¹ oder höher ist.

7. Verfahren zur Herstellung des Siliciumdioxidpulvers gemäß der Ansprüche 1 bis 6, **dadurch gekennzeichnet, dass** man
a) eine Mischung umfassend jeweils ein oder mehrere hydrolysierbare und/oder oxidierbare Siliciumverbindungen, sauerstoffenthaltende Gase und Primär-Brenngase, die mit den sauerstoffenthaltende Gasen unter Bildung von Wasser reagieren, einer aus einem Brenner in einem Flammrohr abbrennenden Flamme zuführt,
b) getrennt hiervon aus einem den Brenner umgebenden Rohr ein oder mehrere Sekundär-Brenngase in das Flammrohr einleitet, und
c) zu einem späteren Zeitpunkt diesem Reaktionsgemisch ein oder mehrere Tertiär-Brenngase innerhalb des Flammrohres zuführt und
d) nachfolgend den Feststoff aus dem Reaktionsgemisch abtrennt wobei gilt
gamma₁ < 1, gamma₂ < 1 und gamma₃ < 1 und
gamma_{1/2} = gamma₁ + gamma₂ < 1
gamma_{Gesamt} = gamma₁ + gamma₂ + gamma₃ > 1 und
lambda₁ > 1 mit
gamma₁ = Primär-Brenngas / stöchiometrisch benötigtes Brenngas
gamma₂ = Sekundär-Brenngas / stöchiometrisch benötigtes Brenngas
gamma₃ = Tertiär-Brenngas / stöchiometrisch benötigtes Brenngas und
lambda₁ = Sauerstoff im sauerstoffenthaltenden Gas / stöchiometrisch benötigter Sauerstoff

8. Verfahren nach Anspruch 7,
**dadurch gekennzeichnet,**
**dass** gamma₁ > gamma₂.

9. Verfahren nach den Ansprüchen 7 oder 8,
**dadurch gekennzeichnet,**
**dass** gamma₁ < gamma₃ und/oder gamma₂ < gamma₃.

10. Verfahren nach den Ansprüchen 7 bis 9,
**dadurch gekennzeichnet,**
**dass** 0,2 ≤ gamma₁ ≤ 0,6 und 0,4 ≤ gamma₃ ≤ 0,8.

11. Verfahren nach den Ansprüchen 7 bis 10,
**dadurch gekennzeichnet,**
**dass** die Zuführung von Sekundär-Brenngas und/oder Tertiär-Brenngas mittels einer Ringdüse erfolgt.

12. Verfahren nach den Ansprüchen 7 bis 11,
**dadurch gekennzeichnet,**
**dass** 1 < lambda₁ ≤ 10.

13. Verfahren nach den Ansprüchen 7 bis 12,
**dadurch gekennzeichnet, dass**
man zusätzlich ein weiteres Sauerstoff enthaltendes Gas in das Flammrohr einbringt.

14. Verfahren zur Herstellung eines oberflächenmodifizierten Siliciumdioxidpulvers, welches in Form aggregierten Primärpartikeln vorliegt, deren Oberfläche oder Teile davon mit chemisch gebundenen linearen und/oder verzweigten Alkylsilylgruppen mit 1 bis 20 Kohlenstoffatomen belegt sind, bei dem man das Siliciumdioxidpulver gemäß der Ansprüche 1 bis 6 mit einem oder mehreren, gegebenenfalls in einem organischen Lösungsmittel gelösten Mitteln zur Oberflächenmodifizierung, welche lineare und/oder verzweigte Alkylsilylgruppen mit 1 bis 20 Kohlenstoffatomen aufweisen oder bei denen diese während der Reaktion entstehen, besprüht und das Gemisch anschließend bei einer Temperatur von 120 bis 400°C über einen Zeitraum von 0,5 bis 8 Stunden, gegebenenfalls unter Schutzgas, thermisch behandelt.

15. Verfahren nach Anspruch 14,
**dadurch gekennzeichnet, dass**
das Mittel zur Oberflächenmodifizierung aus der Gruppe bestehend aus Hexamethyldisilazan, Dimethyldimethoxysilan, Dimethyldiethoxysilan, Trimethylmethoxysilan, Methyltrimethoxysilan, Butyltrimethoxysilan, Dimethyldichlorosilan, Trimethylchlorosilan und/oder Silikonölen ausgewählt ist.

## Claims

1. Silica powder,
**characterized in that** it
is in the form of aggregated primary particles having a mean diameter of at least 40 nm and has a ratio of the BET surface area to STSA surface area of at least 3.5.

2. Silica powder according to Claim 1,
**characterized in that**
the BET surface area is 100 to 400 m²/g.

3. Silica powder according to Claim 1 or 2,
**characterized in that**
it has a thickening action based on the STSA surface area of more than 8 mPas·g/m².

4. Silica powder according to Claims 1 to 3,
**characterized in that**
it has a micropore volume of at least 0.07 cm³/g.

5. Silica powder according to Claims 1 to 4,
**characterized in that**
the fractal dimension Dm is at least 2.80.

6. Silica powder according to Claims 1 to 5,
**characterized in that**
the DBP absorption based on the STSA surface area is 3.5 g/100 g m²g⁻¹ or higher.

7. Process for preparing the silica powder according to Claims 1 to 6, **characterized in that**
a) a mixture comprising in each case one or more hydrolysable and/or oxidizable silicon compounds, oxygen-containing gases and primary combustion gases which react with the oxygen-containing gases to form water is supplied to a flame burning from a burner in a flame tube,
b) separately therefrom, one or more secondary combustion gases are introduced into the flame tube from a tube surrounding the burner, and
c) at a later time, one or more tertiary combustion gases are supplied to this reaction mixture within the flame tube, and
d) then the solids are removed from the reaction mixture,
where
gamma₁ < 1, gamma₂ < 1 and gamma₃ < 1 and
gamma_{1/2} = gamma₁ + gamma₂ < 1
gammaₜₒₜₐₗ = gamma₁ + gamma₂ + gamma₃ > 1 and
lambda₁ > 1 where
gamma₁ = primary combustion gas/stoichiometrically required combustion gas
gamma₂ = secondary combustion gas/stoichiometrically required combustion gas
gamma₃ = tertiary combustion gas/stoichiometrically required combustion gas and
lambda₁ = oxygen in the oxygen-containing gas/stoichiometrically required oxygen

8. Process according to Claim 7,
**characterized in that**
gamma₁ > gamma₂.

9. Process according to Claim 7 or 8,
**characterized in that**
gamma₁ < gamma₃ and/or gamma₂ < gamma₃.

10. Process according to Claims 7 to 9,
**characterized in that**
0.2 ≤ gamma₁ ≤ 0.6 and 0.4 ≤ gamma₃ ≤ 0.8.

11. Process according to Claims 7 to 10,
**characterized in that**
secondary combustion gas and/or tertiary combustion gas is supplied by means of a ring nozzle.

12. Process according to Claims 7 to 11,
**characterized in that**
1 < lambda₁ ≤ 10.

13. Process according to Claims 7 to 12,
**characterized in that**
a further oxygen-containing gas is additionally introduced into the flame tube.

14. Process for preparing a surface-modified silica powder present in the form of aggregated primary particles, the surface of which or parts thereof is covered by chemically bound linear and/or branched alkylsilyl groups having 1 to 20 carbon atoms, in which
the silica powder according to Claims 1 to 6 is sprayed with one or more surface-modifying agents which are optionally dissolved in an organic solvent and have linear and/or branched alkylsilyl groups having 1 to 20 carbon atoms, or with which these groups are formed during the reaction, and the mixture is subsequently treated thermally at a temperature of 120 to 400°C over a period of 0.5 to 8 hours, optionally under protective gas.

15. Process according to Claim 14,
**characterized in that**
the surface-modifying agent is selected from the group consisting of hexamethyldisilazane, dimethyldimethoxysilane, dimethyldiethoxysilane, trimethylmethoxysilane, methyltrimethoxysilane, butyltrimethoxysilane, dimethyldichlorosilane, trimethylchlorosilane and/or silcone oils.

## Revendications

1. Poudre de dioxyde de silicium, **caractérisée en ce qu'**elle se trouve sous forme de particules primaires agrégées présentant un diamètre moyen d'au moins 40 nm et présente un rapport de la surface BET à la surface STSA d'au moins 3,5.

2. Poudre de dioxyde de silicium selon la revendication 1, **caractérisée en ce que** la surface BET est de 100 à 400 m²/g.

3. Poudre de dioxyde de silicium selon les revendications 1 ou 2, **caractérisée en ce qu'**elle présente un effet d'épaississement, se rapportant à la surface STSA, de plus de 8 mPa.s * g/m².

4. Poudre de dioxyde de silicium selon les revendications 1 à 3, **caractérisée en ce qu'**elle présente un volume de micropores d'au moins 0,07 cm³/g.

5. Poudre de dioxyde de silicium selon les revendications 1 à 4, **caractérisée en ce que** la dimension fractale Dₘ est d'au moins 2,80.

6. Poudre de dioxyde de silicium selon les revendications 1 à 5, **caractérisée en ce que** l'absorption de DBP, se rapportant à la surface STSA, est de 3,5 g/100 g m²g⁻¹ ou plus.

7. Procédé pour la préparation de la poudre de dioxyde de silicium selon les revendications 1 à 6, **caractérisé en ce qu'**on
a) introduit un mélange comprenant à chaque fois un ou plusieurs composés hydrolysables et/ou oxydables du silicium, des gaz contenant de l'oxygène et des gaz combustibles primaires, qui réagissent avec les gaz contenant de l'oxygène en formant de l'eau, dans une flamme sortant d'un brûleur et brûlant dans un tube à flamme,
b) introduit, séparément de ceux-ci, à partir d'un tube entourant le brûleur, un ou plusieurs gaz combustibles secondaires dans le tube à flamme et
c) introduit dans ce mélange réactionnel à un moment ultérieur un ou plusieurs gaz combustibles tertiaires à l'intérieur du tube à flamme et
d) sépare ensuite le solide du mélange réactionnel où
gamma₁ < 1, gamma₂ < 1 et gamma₃ < 1 et gamma_{1/2} = gamma₁ + gamma₂ < 1
gamma_{Total} = gamma₁ + gamma₂ + gamma₃ > 1 et lambda₁ > 1 avec
gamma₁ =gaz combustible primaire/gaz combustible stoechiométriquement nécessaire
gamma₂ =gaz combustible secondaire/gaz combustible stoechiométriquement nécessaire
gamma₃ =gaz combustible tertiaire/gaz combustible stoechiométriquement nécessaire
lambda₁ = oxygène dans le gaz contenant de l'oxygène/oxygène stoechiométriquement nécessaire.

8. Procédé selon la revendication 7, **caractérisé en ce que** gamma₁ > gamma₂.

9. Procédé selon les revendications 7 ou 8, **caractérisé en ce que** gamma₁ < gamma₃ et/ou gamma₂ < gamma₃.

10. Procédé selon les revendications 7 à 9, **caractérisé en ce que** 0,2 ≤ gamma₁ ≤ 0,6 et 0,4 gamma₃ ≤ 0,8.

11. Procédé selon les revendications 7 à 10, **caractérisé en ce que** l'introduction du gaz combustible secondaire et/ou du gaz combustible tertiaire a lieu au moyen d'une buse annulaire.

12. Procédé selon les revendications 7 à 11, **caractérisé en ce que** 1 < lambda₁ ≤ 10.

13. Procédé selon les revendications 7 à 12, **caractérisé en ce qu'**on introduit en plus un autre gaz contenant de l'oxygène dans le tube à flamme.

14. Procédé pour la production d'une poudre de dioxyde de silicium à surface modifiée, qui se trouve sous forme de particules primaires agrégées, dont la surface ou des parties correspondantes est/sont revêtue(s) de groupes alkylsilyle liés chimiquement, linéaires et/ou ramifiés, comprenant 1 à 20 atomes de carbone, dans lequel on asperge la poudre de dioxyde de silicium selon les revendications 1 à 6 par un ou plusieurs agents, le cas échéant dissous dans un solvant organique, pour la modification de surface, qui présente(nt) des groupes alkylsilyle linéaires et/ou ramifiés, comprenant 1 à 20 atomes de carbone ou avec le(s)quel(s) ceux-ci se forment pendant la réaction, et on traite ensuite le mélange thermiquement à une température de 120 à 400 °C sur un laps de temps de 0,5 à 8 heures, le cas échéant sous gaz de protection.

15. Procédé selon la revendication 14, **caractérisé en ce que** l'agent pour la modification de surface est choisi dans le groupe constitué par l'hexaméthyldisilazane, le diméthyldiméthoxysilane, le diméthyldiéthoxysilane, le triméthylméthoxysilane, le méthyltriméthoxysilane, le butyltriméthoxysilane, le diméthyldichlorosilane, le triméthylchlorosilane et/ou les huiles de silicone.
